# EUROPEAN PATENT APPLICATION

(11) **EP 1 424 003 A1**
(43) Date of publication of application: **02.06.2004**
(21) Application number: 03078748.5
(22) Date of filing: 27.11.2003
(51) Int. Cl.: A01G 9/24

(54) **Holder assembly**

(30) Priority: 27.11.2002 NL 1021996
(71) Applicant: Ecofys BV, 3526 KL Utrecht (NL)
(72) Inventor: Heller, Ellen Mathilde Barbara, 3524 BA Utrecht (NL); Schoonderbeek, Gilbertus Gualtherus, 3551 AC Utrecht (NL); Opdam, Joannes Jozef Gerardus, 1075 BW Amsterdam (NL)
(74) Representative: van Westenbrugge, Andries

(57) **Abstract**

Holder assembly (1) for plants, consisting of a container (3) in which said plants are accommodated and also a holder (4) in which the containers (3) are placed. Flexible cooling pipes (5) are provided at the boundary between holder (4) and containers (3). Through the application of the pressure of the cooling fluid, which in particular comprises water, the pipes (5) in the holder (4) are pressed against the container (3), so that optimum transfer of cold is ensured.

## Description

The present invention relates to a holder assembly for plants, comprising a container that accommodates the plant, and cooling/heating pipes for cooling the underside of said plant.

Such a construction is generally known in the prior art. In this case plants are grown in, for example, a soil and pipes are laid in such a soil, through which pipes cooling water is conveyed through such a soil. This is carried out, inter alia, for strawberries, freesias and alstroemerias. The use of pipes in the ground has the disadvantage that during disinfection of said ground or the substrate said pipes have to be removed from it and subsequently laid in it.

However, many plants are grown in containers and it is not possible in practice to cool such containers in a simple manner. In the prior art attempts have been made to blow cold air against such containers, in order to cool the plants in this way. It has, however, been found that the heat transfer of such containers is so poor that the desired effect is generally not achieved in this way.

Another proposal used in the prior art is to irrigate the plant soil or bed with cold water. However, it has been found that sufficient cooling cannot be introduced by this means.

EP-0165356 discloses a system consisting of a container-shaped holder in which to place a large number of pots. Pipes, through which a heating fluid can circulate, are provided below this container. Said container is made of plastic material. The pipes are placed on a frame. Since the plants are placed in an open position on the holder, heat transfer can only take place through the bottom of said holder.

It is the object of the present invention to provide a holder assembly by means of which plants placed in containers can be appropriately cooled. More particularly, the aim is to cool the substrate to a temperature of 12 - 16°C. It has been found that the development of the root system is improved in this case and a greater plant yield per unit area can be obtained.

This object is achieved in the case of a holder assembly of the type described above by the fact that a holder that accommodates the container is present, the boundary between holder and container comprising said cooling/heating pipes.

According to the present invention, the container in which the plant is accommodated is placed in a holder that substantially encloses said container. Cooling/heating pipes are provided on the boundary surface between holder and container, through which pipes a cold or heat medium such as water flows.

Surprisingly, it has been found that through direct contact of the cooling pipe and the container, sufficient energy transfer to achieve the desired cooling is obtained.

In this case a close contact between container and cooling pipes is of great importance. This can be achieved, inter alia, by making the cooling pipes near the boundary between holder and container flexible, so that the cooling pipes can adapt to some extent to the shape of the container.

Further improvement of the contact between cooling pipes and container can be achieved by making these cooling pipes so "floppy" that they expand when there is pressure from the cooling or cold fluid. In this way good retention of the container in the holder can be achieved. This means that in a situation in which little or no pressure prevails in the cooling pipes the container is placed in the holder and pressure is subsequently applied to the cooling fluid or cold medium. As a result, the cooling pipes will rest against the container and optimum heat transfer will be provided.

An energy saving can be achieved if the holder is provided internally or externally with an insulating material. By means of such material, heat exchange occurs only between cooling pipes and container, while the heat losses by way of the container are negligible, or in any case are limited. Further energy saving can be achieved if the outside of the container is made of white and/or reflecting material, in order to prevent the penetration of heat as much as possible.

If the underside of the plant is cooled in this way, the main energy loss is from the absorption of heat from the boundary surface between the top of the soil/substrate and the environment. According to an advantageous embodiment of the invention, a covering insulating cover sheet or layer is fitted there. Furthermore, such a cover sheet can function as a means of absorbing any forces acting between the container and the holder. This applies in particular if the pipes described above comprise a hose that is expandable when the pressure of the cooling fluid is applied and said hose is provided on one side or on both sides of the (rectangular) container. The holder is pressed apart in this way.

The holder described above can be designed to receive one or more containers. The holder and containers can be of any imaginable shape. For the cooling pipes it is likewise possible to use any material known in the prior art. These cooling pipes will not in principle be exposed to light. A flexible hose made of PE or PVC material is mentioned as an example, and the excess pressure used can be, for example, 1 - 2 atm. The surface of the flexible hose must be relatively large if considerable cooling is required.

In the case of an insulating design of the holder, the latter is preferably made of polystyrene foam. The holder can be provided on the outside with ribs, by means of which said holder rests on a support such as a propagating table and, by providing the latter with ribs, the contact face with such a support can be reduced, with the result that the heat transfer is limited.

If various pipes are fitted for cooling of a series of holders, said pipes can be provided in countercurrent. Likewise, a number of pipes can be placed one above the other on the side of the container. Instead of direct contact between hose and container, a metal auxiliary construction can be present, in which the container is accommodated with close contact. Such a metal plate is then cooled by the abovementioned hoses.

The holder containing the container or containers can be provided in a propagating room in any way known in the prior art. For instance, it is possible to place the holder in the bottom of a greenhouse, but it is also possible to place it on a table or to position it in another raised manner. Furthermore, it is possible to fix the assembly suspended from a construction.

According to an advantageous embodiment of the present invention, heat transfer takes place not only near the bottom of the container, but also laterally. A closely fitting contact is provided here.

The invention will be explained in greater detail below with reference to an exemplary embodiment shown in the drawing.

In the drawing:
Fig. 1 shows diagrammatically in cross section a first embodiment of the holder assembly according to the invention;
Fig. 2 shows in the same cross section a second embodiment of the invention; and
Fig. 3 shows a top view of the construction shown in Fig. 2.

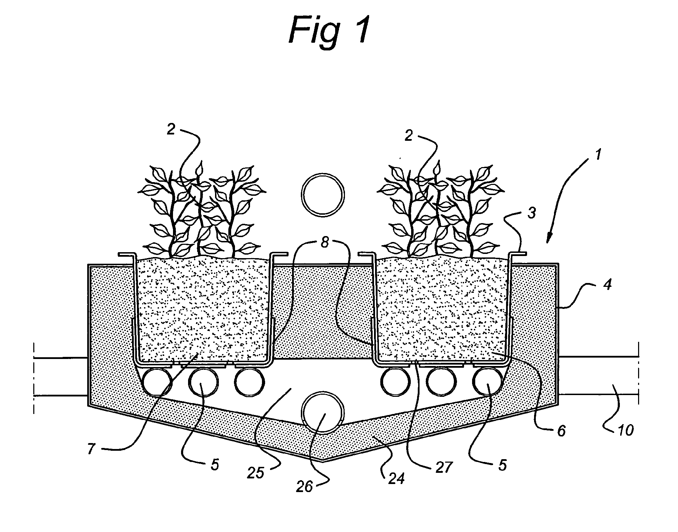

In Fig. 1 the holder assembly according to the invention is indicated by reference numeral 1. Said assembly serves to accommodate a very diagrammatically illustrated plant, which can be any plant in the case of which cooling has to be used.

The plant 2 is accommodated in a container 3. Said container is of a rectangular shape in the example shown and will taper off slightly towards the top, in order to permit removal from the holder 4 surrounding the container 3. Container 3 can be made of any conventional material such as plastic and the like. A space 25 can be present on the underside of container 3, in order to absorb water and prevent root rot.

Holder 4 is accommodated in support 10. The manner of fixing is of no further importance. Holder 4 is preferably made of a rigid plastic material or ceramic material. Insulating material 24 is present inside it. In addition, a number of cooling pipes 5, through which water circulates, are fitted. It is possible for the water to circulate in the same direction in all six hoses illustrated, but it is likewise possible for the flow to take place in two directions. As can be seen from Fig. 1, the lower boundary surface of container 3 is placed resting against the hoses 5, so that optimum heat transfer is provided. Moreover, the hoses are provided with heat (cold) conducting plates 8, in order to increase the contact surface with which the cold coming particularly from the outermost hoses for a container is transferred in the optimum manner to the bottom part of the holder. These conducting plates extend not only below the containers 3, but also laterally along them. According to a preferred embodiment of the invention, said lateral extension is at least one tenth and more, in particular at least one third, of the total height of the containers. Directly underneath the hoses 5 is an empty space 25. Said empty space may be filled with a porous material if desired. At the lowest point of said space a drainage pipe 26 is provided. The containers 3 are provided with apertures 27 on the underside, so that moisture can pass by way of these apertures 27 and space 25 into drainage pipe 26.

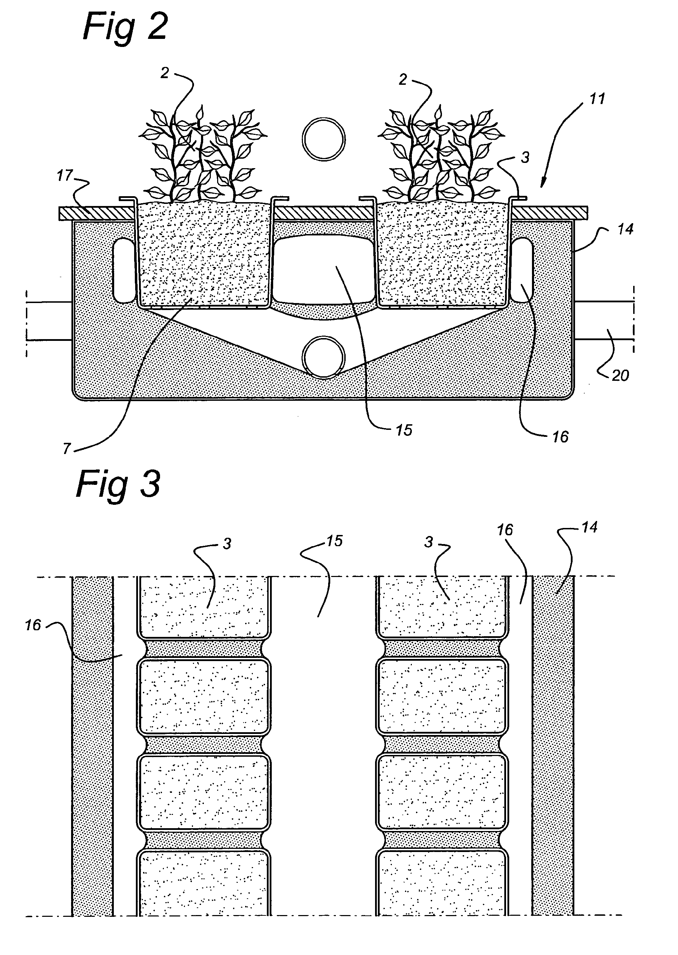

In Fig. 2 a variant of the construction according to Fig. 1 is shown in its entirety by reference numeral 11. The containers 3 are in principle unchanged, but the holder 4 accommodating said containers is now indicated by 14. The cooling pipes are indicated by 15 and 16 and consist of inflatable hoses. The volume and contact surface are increased by applying the pressure of the cold medium or cooling fluid, in this case water. Here again, a hollow or porous space is present underneath the containers and a central drainage pipe is provided. The containers are supported in a manner not shown in any further detail.

In a situation with low pressure or no pressure inside the hoses 15, 16 the containers 3 are placed in holder 14. Pressure is then applied, and the volume of the hoses 15, 16 increases until the latter come to rest against the walls of the containers 3, with the result that optimum heat transfer is provided. The holder 14 is designed in such a way that said holder can absorb the horizontal transverse forces now taking effect. A plate 17 provided with apertures may be present, in order to absorb such transverse forces. In addition, such a plate 17 and also at least the outside of holder 14 can be provided with insulating features. Instead of or in addition to such a plate, a mat-like material such as a coconut matting can be provided. On the one hand, this provides insulation and, on the other hand, it limits evaporation of moisture from the substrate in which the plant has been placed. Holder 14 is accommodated in support 20. All this is shown in top view in Fig. 3, from which it can be seen that a series of containers 3 can be placed both one behind the other and next to each other.

The containers/holders described above can be arranged in any way known in the prior art. According to the present invention, they can be placed at a raised level, in a movable manner and/or in tiers one above the other.

After reading the above description, variants will immediately spring to mind for the person skilled in the art through combination with existing constructions or through modification of what is shown here. Such variants lie within the scope of the appended claims.

## Claims

1. Holder assembly (1, 11) for plants, comprising a container (3) that accommodates the plant, and cooling/heating pipes for cooling or heating the underside of said plant, **characterized in that** a holder (4, 14) that accommodates the container is present, the boundary between holder and container comprising said cooling/heating pipes (5, 15).

2. Holder assembly according to Claim 1, in which said cooling pipes are of a flexible design at the boundary between holder and container.

3. Holder assembly according to one of the preceding claims, in which said cooling pipes comprise a hose that is expandable when there is pressure from the cooling fluid.

4. Holder assembly according to one of the preceding claims, in which said cooling fluid comprises water.

5. Holder assembly according to one of the preceding claims, in which said holder (4, 14) is provided with an insulating material (24).

6. Holder assembly according to one of the preceding claims, in which said cooling pipes are provided with conducting plates (8).

7. Holder assembly according to one of the preceding claims, in which said container comprises a plastic material.

8. Holder assembly according to one of the preceding claims, comprising an insulating cover plate (17) covering the environment of the plant.

9. Holder assembly according to one of the preceding claims, in which said holder is designed to accommodate a series of containers (3) situated at a distance from one another.
